# EUROPEAN PATENT APPLICATION

(11) **EP 4 250 192 A1**
(43) Date of publication of application: **27.09.2023**
(21) Application number: 21894359.5
(22) Date of filing: 08.10.2021
(51) Int. Cl.: G06Q 10/00, G06Q 50/08

(54) **STRUCTURE INSPECTION ASSISTANCE DEVICE, STRUCTURE INSPECTION ASSISTANCE METHOD, AND PROGRAM**

(30) Priority: 19.11.2020 JP 2020192303
(71) Applicant: FUJIFILM Corporation, Tokyo 106-8620 (JP)
(72) Inventor: HORITA, Shuhei, Tokyo 106-8620 (JP)
(74) Representative: Meissner Bolte Partnerschaft mbB
(86) International application number: PCT/JP2021/037302
(87) International publication number: WO 2022/107485

(57) **Abstract**

A structure inspection assistance apparatus, a structure inspection assistance method, and a program that enable more efficient commenting work and an equalization of findings and other comments are provided. The structure inspection assistance apparatus includes a processor configured to perform a selection process of accepting a selection of target structure-related information including at least one of a captured image or damage information pertaining to a target structure, a preparation process of preparing a comment on damage to the target structure on a basis of the selected target structure-related information, and a display process of displaying the comment on a display.

## Description

### BACKGROUND OF THE INVENTION

### 1. Field of the Invention

The present invention relates to a structure inspection assistance apparatus, a structure inspection assistance method, and a program.

### 2. Description of the Related Art

Social infrastructure includes structures such as bridges and tunnels. These structures may become damaged, and due to the progressive nature of such damage, regular inspection is desirable.

An inspector who has inspected a structure is required to prepare, as a form indicating the result of the inspection, an inspection report in a predetermined format on the basis of inspection guidelines established by a person such as an administrator of the structure. By reviewing a damage diagram prepared in a predetermined format, even an expert different from the inspector who actually carried out the inspection can grasp the progress of damage to the structure and formulate a maintenance plan for the structure.

Similarly, the condition of structures such as condominiums and office buildings is regularly inspected, and repairs and overhauls are carried out on the basis of the inspection results. As part of the inspection, an inspection report is prepared. With regard to the preparation of an inspection report, JP2019-082933A discloses a system that can shorten the time required to prepare an inspection report.

### SUMMARY OF THE INVENTION

In an inspection report for a structure, the basis and rationale for the determination of a countermeasure category with respect to damage, soundness, and the like are written as comments in a findings column. However, it is necessary to prepare the comments while referring to various data, and the work is complicated. Moreover, in some cases, human factors such as the proficiency level of the preparer may result in variations in the comments.

The present invention has been created in the light of such circumstances, and provides a structure inspection assistance apparatus, a structure inspection assistance method, and a program that enable more efficient commenting work and an equalization of findings and other comments.

A structure inspection assistance apparatus according to a first aspect includes a processor configured to perform a selection process of accepting a selection of target structure-related information including at least one of a captured image or damage information pertaining to a target structure, a preparation process of preparing a comment on damage to the target structure on a basis of the selected target structure-related information, and a display process of displaying the comment on a display.

In a structure inspection assistance apparatus according to a second aspect, the preparation process prepares at least one comment on damage to the target structure on a basis of at least one of the captured image or the damage information.

In a structure inspection assistance apparatus according to a third aspect, the preparation process uses machine learning to prepare the comment on damage to the target structure.

A structure inspection assistance apparatus according to a fourth aspect includes a database storing past target structure-related information, including at least one of a captured image or damage information pertaining to a structure, in association with a comment on damage to the structure, wherein the preparation process prepares, as a comment on damage to the structure, a comment on damage to the structure regarding similar damage that is similar to damage to the target structure, on a basis of the target structure-related information and structure-related information stored in the database.

In a structure inspection assistance apparatus according to a fifth aspect, the selection process accepts a selection of the target structure-related information through a selection of a three-dimensional model of a structure associated with the target structure-related information.

In a structure inspection assistance apparatus according to a sixth aspect, the selection process accepts an automatic selection, from the target structure, of target structure-related information about which the comment is prepared.

In a structure inspection assistance apparatus according to a seventh aspect, the selection process accepts the automatic selection of the target structure-related information on a basis of at least one of the captured image or the damage information.

In a structure inspection assistance apparatus according to an eighth aspect, the processor executes an editing process of accepting an edit to the comment and modifying the comment.

In a structure inspection assistance apparatus according to a ninth aspect, the editing process accepts, as the edit to the comment, a comment candidate selected from a plurality of comment candidates corresponding to the comment.

In a structure inspection assistance apparatus according to a 10th aspect, the processor executes a related information extraction process of extracting related information that is related to damage to the target structure, and the display process displays the related information on the display.

A structure inspection assistance method according to an 11th aspect is enacted by a processor and includes a selecting step of accepting a selection of target structure-related information including at least one of a captured image or damage information pertaining to a target structure, a preparing step of preparing a comment on damage to the target structure on a basis of the selected target structure-related information, and a displaying step of displaying the comment on a display.

A structure inspection assistance program according to a 12th aspect causes a computer to achieve a selection function of accepting a selection of target structure-related information including at least one of a captured image or damage information pertaining to a target structure, a preparation function of preparing a comment on damage to the target structure on a basis of the selected target structure-related information, and a display function of displaying the comment on a display.

According to a structure inspection assistance apparatus, a structure inspection assistance method, and a program of the present invention, more efficient commenting work and an equalization of findings and other comments are possible.

### BRIEF DESCRIPTION OF THE DRAWINGS

Fig. 1 is a block diagram illustrating an example of a hardware configuration of a structure inspection assistance apparatus;
Fig. 2 is a block diagram illustrating processing functions achieved with a CPU;
Fig. 3 is a diagram illustrating information and the like stored in a storage unit;
Fig. 4 is a flowchart illustrating an inspection assistance method using a structure inspection assistance apparatus;
Fig. 5 is a diagram illustrating an example of captured images;
Fig. 6 is a table illustrating an example of damage information;
Fig. 7 is a diagram illustrating an example of a three-dimensional model;
Fig. 8 is a diagram illustrating how target structure-related information is selected from a three-dimensional model;
Fig. 9 is a block diagram of a preparation processing unit that executes a process using a trained model;
Fig. 10 is a block diagram of a preparation processing unit that executes a process of extracting similar damage;
Fig. 11 is a diagram illustrating a method of extracting similar damage;
Fig. 12 is a diagram illustrating an example of a screen displayed on a display device in a selecting step;
Figs. 13A to 13C are diagrams illustrating other examples of screens displayed on the display device in the selecting step;
Fig. 14 is a diagram illustrating an example of displaying, on the display device, an example of a template for inspection report data;
Fig. 15 is a diagram illustrating an example of displaying, on the display device, inspection report data in which text data other than findings and other comments has been entered;
Fig. 16 is a diagram illustrating an example of displaying, on the display device, inspection report data in which text data of comments has been entered; and
Figs. 17A and 17B are diagrams illustrating an example of an editing process.

### DESCRIPTION OF THE PREFERRED EMBODIMENTS

Hereinafter, preferred embodiments of a structure inspection assistance apparatus, a structure inspection assistance method, and a program according to the present invention will be described in accordance with the attached drawings. Herein, a "structure" is a construction work, including civil engineering structures such as bridges, tunnels, and dams, for example, and also encompassing other architectural works such as office buildings, houses, and the walls, columns, and beams of buildings.

### Hardware configuration of structure inspection assistance apparatus

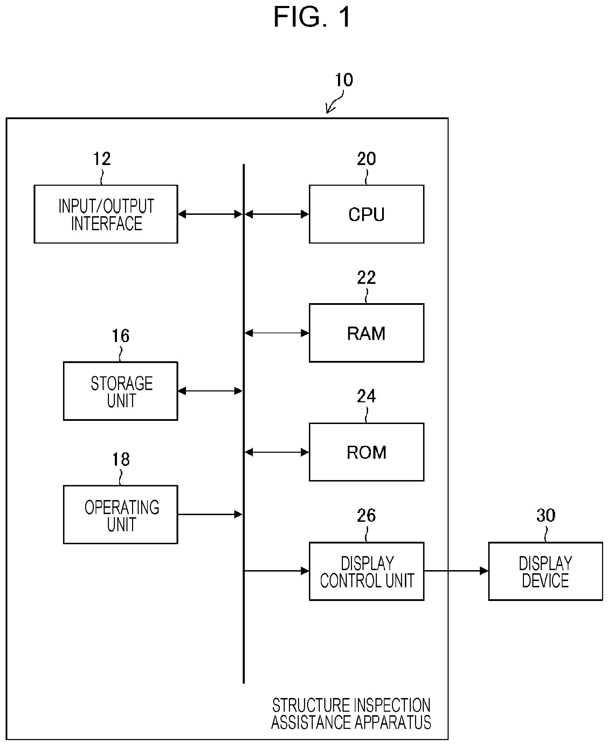

Fig. 1 is a block diagram illustrating an example of a hardware configuration of a structure inspection assistance apparatus according to the present invention.

A computer or a workstation may be used as the structure inspection assistance apparatus 10 illustrated in Fig. 1. The structure inspection assistance apparatus 10 in this example mainly includes an input/output interface 12, a storage unit 16, an operating unit 18, a central processing unit (CPU) 20, random access memory (RAM) 22, read-only memory (ROM) 24, and a display control unit 26. A display device 30 forming a display is connected to the structure inspection assistance apparatus 10, and a screen is displayed on the display device 30 under control by the display control unit 26 according to a command from the CPU 20. The display device 30 may be a monitor, for example.

The input/output interface 12 can input various data (information) into the structure inspection assistance apparatus 10. For example, data to be stored in the storage unit 16 is inputted through the input/output interface 12.

The CPU (processor) 20 centrally controls each unit by reading out various programs, including a structure inspection assistance program according to an embodiment, stored in the storage unit 16, the ROM 24, or the like, loading the programs into the RAM 22, and performing computations. The CPU 20 also performs various processes of the structure inspection assistance apparatus 10 by reading out a program stored in the storage unit 16 or the ROM 24 and performing computations with the use of the RAM 22.

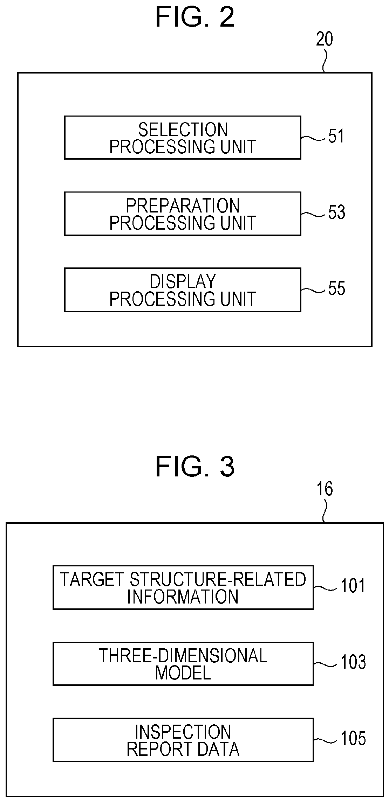

Fig. 2 is a block diagram illustrating processing functions achieved with the CPU 20.

The CPU 20 has a selection processing unit 51, a preparation processing unit 53, a display processing unit 55, and the like. The specific processing function of each unit will be described later. Since the selection processing unit 51, preparation processing unit 53, and display processing unit 55 are a part of the CPU 20, the CPU 20 may also be described as executing the process of each unit.

Returning to Fig. 1, the storage unit (memory) 16 is a memory formed from a hard disk apparatus, flash memory, or the like. The storage unit 16 stores data and programs for running the structure inspection assistance apparatus 10, such as an operating system and a program for executing a structure inspection assistance method. The storage unit 16 also stores information and the like to be used in the present embodiment described hereinafter.

Fig. 3 is a diagram illustrating information and the like stored in the storage unit 16. The storage unit 16 includes a non-transitory recording medium such as a Compact Disc (CD), a Digital Versatile Disc (DVD), a hard disk, and any of various types of semiconductor memory, together with a control unit.

The storage unit 16 mainly stores target structure-related information 101, a three-dimensional model 103, and inspection report data 105.

The target structure-related information 101 includes at least one of a captured image or damage information pertaining to at least a target structure. The captured image is an image of a structure. The damage information includes at least one of a location of damage to the target structure, the type of damage, or the extent of damage. The target structure-related information 101 may also include an image (damage image) indicating damage detected from a captured image of the structure. The damage information may be acquired automatically by image analysis or the like, or may be acquired manually by a user.

The target structure-related information 101 may include multiple types of data, such as a panoramic composite image and a two-dimensional plan, for example. The panoramic composite image is a group of images corresponding to a specific member, obtained as a composite of multiple captured images. The damage information (damage image) may also be a panoramic composite.

The three-dimensional model 103 is the data of a three-dimensional model of the structure created on the basis of multiple captured images, for example. The three-dimensional model 103 includes data pertaining to the areas and names of members forming the structure. Each member area and member name may be specified on the three-dimensional model 103.

Member areas and member names may be specified with respect to the three-dimensional model 103 automatically from information related to the shape, dimensions, and the like of the members. Member areas and member names may also be specified with respect to the three-dimensional model 103 on the basis of user operations.

The target structure-related information 101 and the three-dimensional model 103 may be associated with one another. For example, the target structure-related information 101 is stored in the storage unit 16 in association with locations and members on the three-dimensional model 103. Through the specification of locations on the three-dimensional model 103, the target structure-related information 101 may also be displayed on the three-dimensional model 103. Also, through the specification of the target structure-related information 101, the three-dimensional model 103 may be displayed together with the target structure-related information 101.

The inspection report data 105 is a template (a document file in a designated format) for a two-dimensional inspection report. The template may also be in a format defined by the Japanese Ministry of Land, Infrastructure, Transport and Tourism or a local government.

The operating unit 18 illustrated in Fig. 1 includes a keyboard and mouse, and through these devices the user is able to cause the structure inspection assistance apparatus 10 to perform required processes. The display device 30 may also function as an operating unit through the use of a touch panel device.

The display device 30 is a liquid crystal display (LCD) panel or other display device, for example, and can be made to display three-dimensional model data, the target structure-related information 101, the inspection report data 105, and comments.

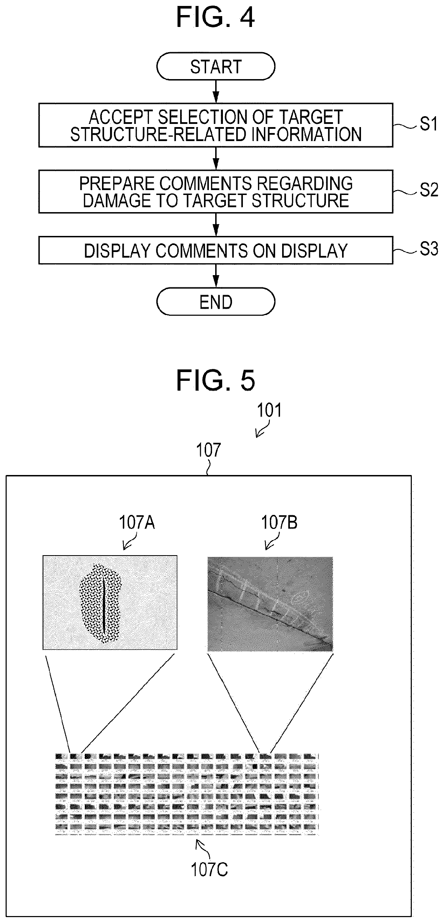

Fig. 4 is a flowchart illustrating a structure inspection assistance method using the structure inspection assistance apparatus.

### Selecting step

The selection processing unit 51 accepts a selection of the target structure-related information 101 (selecting step: step S1). As described above, the target structure-related information 101 includes at least one of a captured image or damage information.

The target structure-related information 101 is acquired from the storage unit 16 where the information is stored. If the target structure-related information 101 is not stored in the storage unit 16, the target structure-related information 101 may be acquired through the input/output interface 12 from another storage unit over a network.

Fig. 5 is a diagram illustrating an example of captured images 107 included in the target structure-related information 101. Captured images 107A and 107B are multiple images of a structure. A captured image group 107C contains the multiple captured images 107A, 107B, and the like which are obtained by capturing multiple locations of the structure. Note that in this specification, the captured images are also simply referred to as the captured image(s) 107, as necessary.

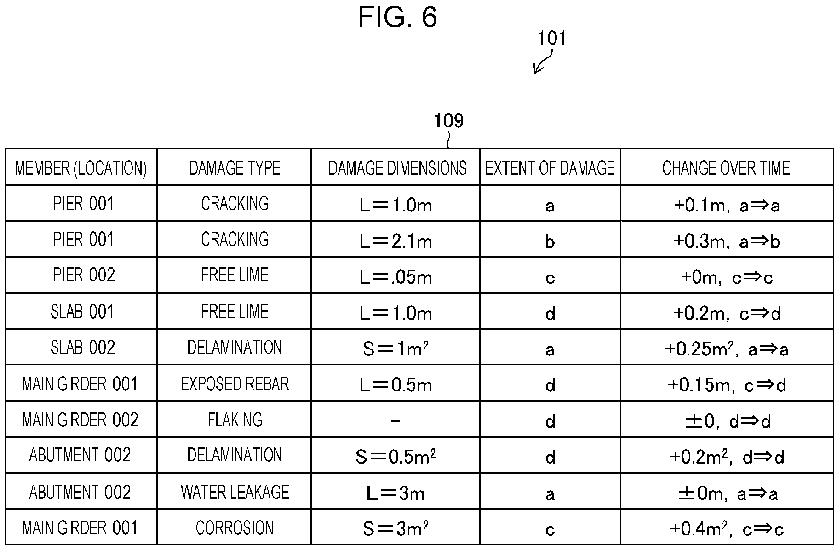

Fig. 6 is a table illustrating an example of damage information 109 included in the target structure-related information 101. The damage information 109 illustrated in Fig. 6 includes the member (location of damage), type of damage, dimensions of damage, extent of damage, and change over time. The damage information 109 may simply include at least one of the location of damage to the target structure, the type of damage, or the extent of damage. Additionally, the damage information 109 may include damage information other than the damage information 109 illustrated in Fig. 6, such as the cause of damage, for example.

Next, a preferred selection process in the selecting step (step S1) will be described.

In a first selection process, the selection processing unit 51 may accept the selection of the target structure-related information 101 through the selection of the three-dimensional model 103 of the structure associated with the target structure-related information 101.

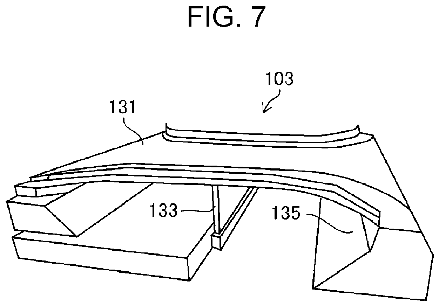

First, the three-dimensional model will be described. Fig. 7 is a diagram illustrating an example of the three-dimensional model 103. The three-dimensional model 103 may be displayed as a point cloud, a polygon (mesh), a solid model, or the like. The three-dimensional model 103 in Fig. 7 is obtained by texture mapping to apply captured images (textures) of the structure to a many-sided polygon.

In the example in Fig. 7, the three-dimensional model 103 includes member names and member areas. For example, the three-dimensional model 103 is formed from a slab 131, a pier 133, and an abutment 135.

The target structure-related information 101 is associated with locations and members on the three-dimensional model 103.

The method of creating the three-dimensional model 103 is not limited. Various models exist, and for example, the structure from motion (SfM) method may be used to create the three-dimensional model 103. SfM is a method of reconstructing a three-dimensional shape from a multi-view picture, in which feature points are calculated by an algorithm such as scale-invariant feature transform (SIFT), for example, and employed as a guide to calculate the three-dimensional positions of a point cloud using the principle of triangulation. Specifically, straight lines are drawn from the cameras to a feature point using the principle of triangulation, and the intersection of the two lines passing through the corresponding feature point is the reconstructed three-dimensional point. The three-dimensional positions of the point cloud can be obtained by performing the above work on each detected feature point. The three-dimensional model 103 may also be created using the captured images 107 (captured image group 107C) illustrated in Fig. 5.

Note that although size is not calculated with SfM, the correspondence with actual scale can be obtained by capturing images with a scaler of known dimensions placed in the photographic subject.

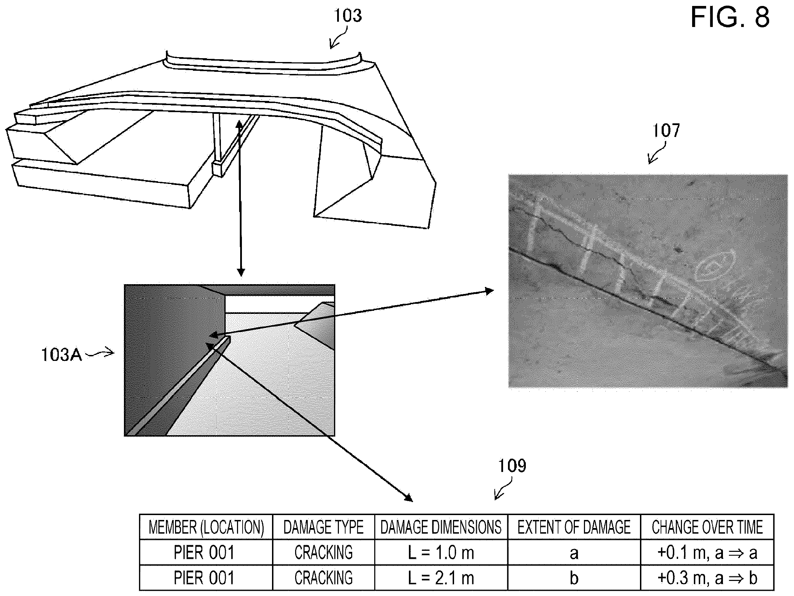

Next, the first selection process will be described on the basis of Fig. 8. As illustrated in Fig. 8, the three-dimensional model 103 illustrating an overall bird's-eye view is displayed on the display device 30 (not illustrated) by the display processing unit 55 (not illustrated). The user makes selections manually on the three-dimensional model 103 through the operating unit 18, thereby causing the display processing unit 55 to display, as intended, an enlarged or reduced three-dimensional model 103A or a three-dimensional model 103A in which any of the viewpoint, line of sight, and field of view has been changed. These three-dimensional models, including the overall bird's-eye view, the enlarged view, and other views having changes, may be referred to as the three-dimensional model 103 in some cases.

By having the user designate a specific position in the three-dimensional model 103A through the operating unit 18, the selection processing unit 51 can accept the selection of the captured image 107 or the damage information 109, that is, the target structure-related information 101. The selection processing unit 51 may also accept the selection of both the captured image 107 and the damage information 109 which are the target structure-related information 101. A three-dimensional model 103 with mapped damage is displayed, and from the three-dimensional model 103, the user can select damage to comment on.

Next, a second selection process will be described. In the second selection process, the selection processing unit 51 may accept an automatic selection, from a target structure, of target structure-related information 101 about which comments are prepared.

In one aspect of the second selection process, the user selects target members (bridge) or spans (tunnel) through the operating unit 18, and the selection processing unit 51 accepts an automatic selection of target structure-related information 101 for each member.

As illustrated in Fig. 8, by having the user designate a specific member on the three-dimensional model 103, the selection processing unit 51 can accept an automatic selection of at least one of the captured image 107 or the damage information 109, that is, the target structure-related information 101, from among the members designated on the three-dimensional model 103.

Other than the method of designating a specific member on the three-dimensional model 103, the user may also select a member from a member list displayed on the display device. The selection processing unit 51 can accept an automatic selection of at least one of the captured image 107 or the damage information 109, that is, the target structure-related information 101, from among the members designated from the member list.

In other words, the selection processing unit 51 automatically selects and accepts the selection of a predetermined quantity of target structure-related information 101 corresponding to target damage for each damage type from among the target members and spans. However, if the entire structure is free of damage, target structure-related information 101 corresponding to damage is not selected.

In another aspect of the second selection process, the selection processing unit 51 automatically selects and accepts the selection of a predetermined quantity of target structure-related information 101 corresponding to target damage from the entirety of a target structure. However, if the entire structure is free of damage, target structure-related information 101 corresponding to damage is not selected.

Next, preferred criteria when automatically selecting the target structure-related information 101 will be described.

As a first selection criterion, the selection processing unit 51 may select the damage that has progressed the most extensively from among the target structure-related information 101. For example, the selection processing unit 51 may select the most extensive damage from among the results of the extent of damage (ranks a, b, c, d, and e) in the damage information 109, and accept the selection of the target structure-related information 101.

As a second selection criterion, the selection processing unit 51 may select the damage with the fastest rate of progression from among the target structure-related information 101. For example, the selection processing unit 51 may select the damage with the fastest rate of progression from among the results of the change over time in the damage information 109, and accept the selection of the target structure-related information 101. The rate of progression may be obtained from the yearly change in length, yearly change in width, yearly change in area, or the like. The rate of progression may also be obtained from the change in damage size per year. For example, the rate of progression may be obtained as the change in crack length per year, or in other words the yearly change in length. The rate of progression may also be obtained as the yearly change in width from the change in the width of damage, such as the change in crack width per year. The rate of progression may also be obtained as, for instance, a yearly change in area from the change in damage area per year or as a yearly change in depth from the change in damage depth per year, such as a change in the depth of wall thinning due to corrosion of steel members.

As a third selection criterion, the selection processing unit 51 may select the damage of largest size from among the target structure-related information 101. For example, the selection processing unit 51 may select, from the results of the captured image 107 or the damage information 109, the longest or widest damage, such as cracking or crazing, or select the damage of broadest area, such as delamination, water leakage, free lime, or corrosion. The selection processing unit 51 accepts the selection of the target structure-related information 101 pertaining to the selected damage.

As a fourth selection criterion, the selection processing unit 51 may select, from among the target structure-related information 101, damage that corresponds to a user-designated cause of damage, such as fatigue, salt damage, neutralization, alkali-aggregate reaction, frost damage, poor construction, or excessive external forces in the case of a concrete member, or fatigue, salt damage, water leakage, material deterioration, coating deterioration, poor construction, or excessive external forces in the case of a steel member. For example, the selection processing unit 51 accepts, from the results of the damage information 109, the selection of the target structure-related information 101 pertaining to the selected damage.

As a fifth selection criterion, the selection processing unit 51 may select damage that exists in an area of focus. For example, the "Guidelines for Regular Inspection of Bridges" (March 2019) by the Japanese Ministry of Land, Infrastructure, Transport and Tourism gives examples of areas of focus that need close attention in regular inspections of concrete bridges. The given areas of focus are (1) end supports, (2) intermediate supports, (3) center span, (4) 1/4 span, (5) concrete cold joints, (6) segment joints, (7) anchorage, and (8) notches. The selection processing unit 51 may accept an automatic selection of the target structure-related information 101 pertaining to damage in each area of focus.

For example, the "Guidelines for Regular Inspection of Road Tunnels" (March 2019) by the Japanese Ministry of Land, Infrastructure, Transport and Tourism gives examples of areas of focus where similar deformations occur due to road tunnel construction methods and the like. The given areas of focus are (1) joints and concrete cold joints of the lining, (2) near the top edge of the lining, and (3) near the middle of the lining span. The selection processing unit 51 may accept an automatic selection of the target structure-related information 101 pertaining to damage in each area of focus.

Note that if the damage cannot be limited to a prescribed number by one of the first to fifth selection criteria alone, a combination of the first to fifth selection criteria may be applied. For example, the selection processing unit 51 may accept an automatic selection of the target structure-related information 101 pertaining to damage that meets the first and second selection criteria. As another example, the selection processing unit 51 may accept an automatic selection of the target structure-related information 101 pertaining to damage that meets the first and third selection criteria. Although the above describes cases of combining two selection criteria, three or more selection criteria may also be combined.

As described above, the CPU 20 functions as the selection processing unit 51. Preparing step

As illustrated in Fig. 4, the preparation processing unit 53 prepares comments on damage to the target structure on the basis of the selected target structure-related information 101 (preparing step: step S2).

Next, a preferred comment preparation process in the preparing step (step S2) will be described.

In a first comment preparation process, the preparation processing unit 53 may use artificial intelligence (AI) to prepare at least one comment on damage to the target structure on the basis of the selected target structure-related information 101.

For the AI, a trained model developed using a convolutional neural network (CNN) can be used, for example.

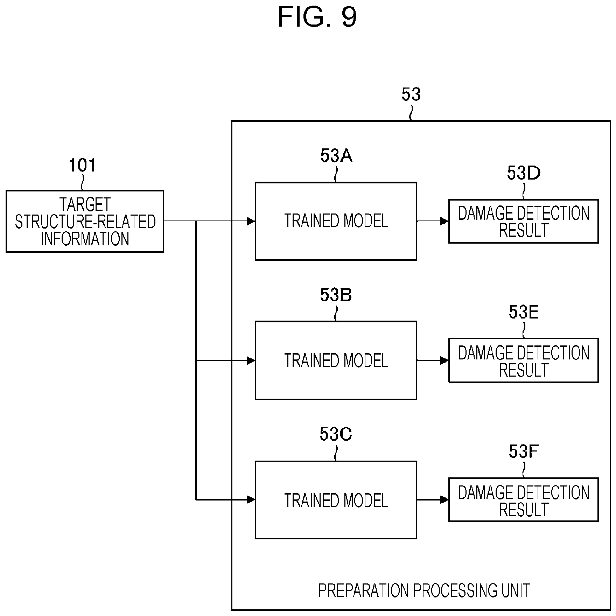

Fig. 9 illustrates a block diagram of the preparation processing unit 53 using a trained model. The preparation processing unit 53 using a trained model is achieved with a CPU or the like.

In Fig. 9, the preparation processing unit 53 includes multiple (in this example, three) trained models 53A, 53B, and 53C corresponding to multiple types of damage.

The trained models 53A, 53B, and 53C each contain an input layer, an intermediate layer, and an output layer, the layers being structured such that a plurality of "nodes" are connected by "edges".

The selected target structure-related information 101 is inputted into the input layer of a CNN. The target structure-related information 101 is at least one of the captured image 107 or the damage information 109 (for example, at least one of damage type, extent, progressiveness of damage, or cause of damage).

The intermediate layer has multiple sets, with each set containing a convolutional layer and a pooling layer, and is the portion where features are extracted from the captured image 107 or the damage information 109 inputted from the input layer. The convolutional layer applies filter processing (performs convolutional operations using a filter) on a nearby node in the previous layer, and acquires a "feature map". The pooling layer reduces the feature map outputted from the convolutional layer to generate a new feature map. The "convolutional layer" is responsible for feature extraction, such as edge extraction, from the captured image 107, or is responsible for feature extraction, such as natural language processing, for example, from the damage information 109.

The output layer of the CNN is the portion that outputs a feature map indicating the features extracted by the intermediate layer. The output layers of the trained models 53A, 53B, and 53C in this example output inference results as damage detection results 53D, 53E, and 53F. The damage detection results 53D, 53E, and 53F include at least one comment on damage derived from each of the trained models 53A, 53B, and 53C.

For example, the trained model 53A is a model that has been trained by machine learning to detect water leakage, surface free lime, and rust fluid damage, and outputs, as the damage detection result 53D, damage areas for each of water leakage, surface free lime, and rust fluid together with the damage type and comments for each damage area. The trained model 53B is a model that has been trained by machine learning to detect delamination and exposed rebar damage, and outputs, as the damage detection result 53E, damage areas for each of delamination and exposed rebar together with the damage type and comments for each damage area. The trained model 53C is a model that has been trained by machine learning to detect cracking and linear free lime damage, and outputs, as the damage detection result 53F, damage areas for each of cracking and linear free lime damage together with the damage type and comments for each damage area.

As described above, the outputted damage detection results 53D, 53E, and 53F are prepared as comments on damage to the target structure. Note that the trained models 53A, 53B, and 53C of the preparation processing unit 53 are not limited to the above embodiment. For example, one configuration may have individual trained models for each damage type, in which each trained model outputs, as the damage detection results, damage areas and comments corresponding to each damage type. In this case, the number of trained models provided is equal to the number of damage types to be inspected. Another configuration may have a single trained model which can handle all damage types and which outputs, as the damage detection results, damage areas together with the damage type and comments for each damage area. Appropriate, that is, accurate and error-free comments can be generated on the basis of the target structure-related information 101. A case in which damage areas together with the damage type and comments for each damage area are outputted as the damage detection results is described, but comments may simply be outputted.

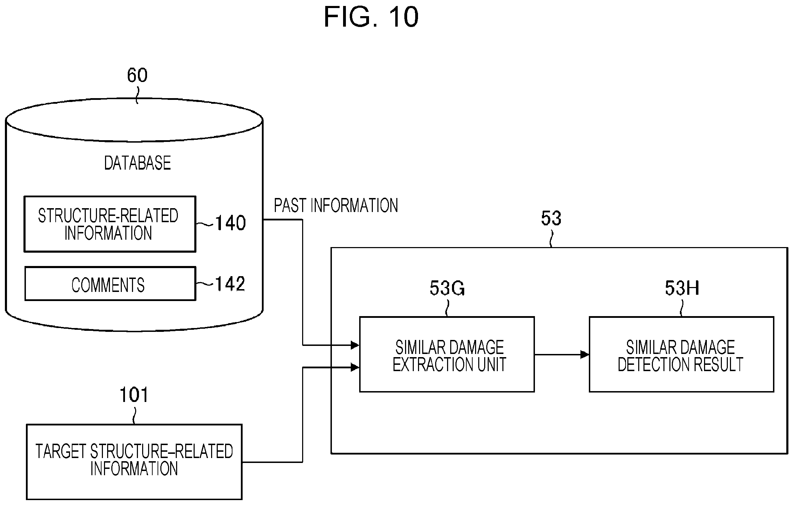

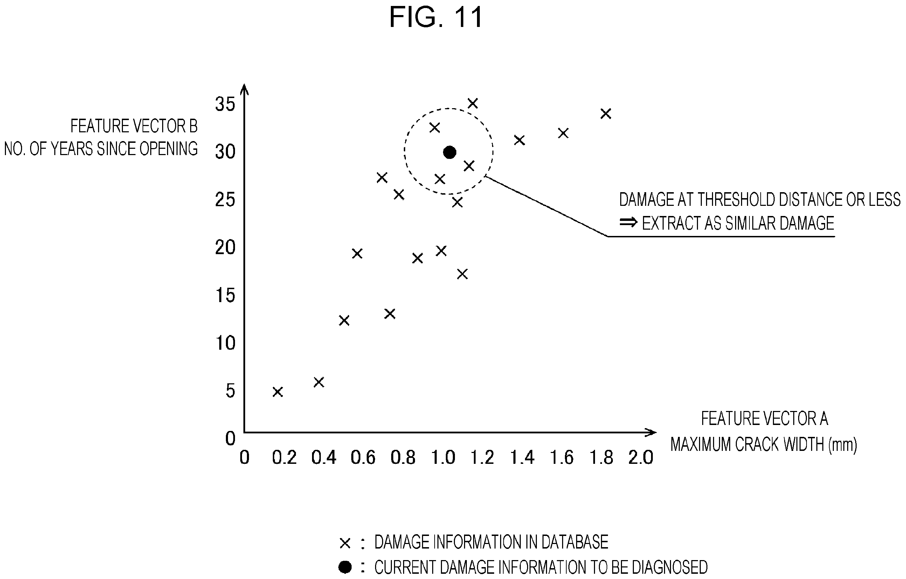

A second comment preparation process will be described on the basis of Figs. 10 and 11. In the second comment preparation process, other than the first preparation process described above, the preparation processing unit 53 may also prepare, as comments on damage to the structure, comments on damage to a structure regarding similar damage that is similar to damage to the target structure, on the basis of the target structure-related information 101 and past structure-related information 140 stored in a database 60. The database 60 may be stored in the storage unit 16 or in another storage unit.

As illustrated in Fig. 10, the database 60 is a portion that associates, stores, and manages structure-related information 140 pertaining to structures inspected in the past and contemporaneously prepared comments 142 on damage to the structures. The structure-related information 140 includes at least one of a captured image or damage information.

The preparation processing unit 53 further includes a similar damage extraction unit 53G.

The target structure-related information 101 selected by the selecting step (step S1) is outputted to the similar damage extraction unit 53G. The similar damage extraction unit 53G extracts, on the basis of the target structure-related information 101, structure-related information 140 and comments 142 that are similar to the target structure-related information 101 from among the past structure-related information 140 and contemporaneously prepared comments 142 on damage to the structures which are stored in the database 60.

The similar damage extraction unit 53G may make a similarity determination on the basis of damage information regarding the type of damage, location of damage, and extent (such as length, width, area, density, and depth) of damage (such as an average or maximum value).

The similar damage extraction unit 53G may also make a similarity determination on the basis of the location of damage and the change in extent over time in addition to the damage information. In this case, at least one of: images captured at multiple points in time of the same area of the structure, damage information at multiple points in time detected from the images captured at multiple points in time, or information indicating change in the damage information over time is preferably stored in the database 60.

The similar damage extraction process by the similar damage extraction unit 53G can detect change in the damage information over time on the basis of the target structure-related information 101 at multiple points in time, and use information indicating the change over time as one piece of information when extracting similar damage that is similar to damage to the target structure from the database 60.

Furthermore, the similar damage extraction unit 53G make a similarity determination with consideration for information other than damage information, for example, at least one of structure information, environment information, history information, or inspection information about a structure.

The similar damage extraction unit 53G extracts, as a similar damage detection result 53H, damage areas of similar damage together with the damage type and comments for each damage area.

Note that, in addition to the target structure-related information 101, the other information below may also be outputted to the similar damage extraction unit 53G. On the basis of one or more of the other information below, the similar damage extraction unit 53G may extract, as the similar damage detection result 53H, structure-related information 140 and comments 142 that are similar to the target structure-related information 101.

### Other information

The other information includes at least one of structure information, environment information, history information, or inspection information about a structure indicated below.
·Structure information: structure type (for bridges: girder bridge, rigid frame bridge, truss bridge, arch bridge, cable-stayed bridge, suspension bridge), member type (for bridges: slab, pier, abutment, girder...), material (steel, reinforced concrete, prestressed concrete (PC)...), etc.
Environment information: traffic volume (per day, per month, per year, cumulative, etc.), distance from the sea, weather (average temperature, average humidity, rainfall, snowfall, etc.)
·History information: conditions at time of construction (temperature at time of construction, etc.), age (completion date, opening date, number of years since these dates), repair history, disaster history (earthquake, typhoon, flood, etc.)
·Inspection information: monitoring information (deflection of structure, amplitude of vibration, period of vibration, etc.), core sampling information, non-destructive testing information (ultrasonic, radar, infrared, percussion, etc.)

The other information may also include the diagnostic purpose of the target structure. The diagnostic purpose may be to determine the extent of damage, determine a countermeasure category, determine soundness, estimate the cause of damage, determine whether repair is necessary, select a repair method, or the like.

Fig. 11 is a diagram illustrating an example of a method of extracting similar damage by the similar damage extraction unit.

In Fig. 11, the structure-related information 140 stored in the database 60 and the target structure-related information 101 are plotted in a feature space defined by feature vectors A and B.

Note that in Fig. 11, the structure-related information 140 stored in the database 60 is denoted by the symbols ×, and the target structure-related information 101 is denoted by the symbol •. The feature vector A indicates the maximum crack width (mm), and the feature vector B indicates the number of years since the opening of the structure. The feature space defined by feature vectors can be a multidimensional space defined by three or more feature vectors, but a two-dimensional space defined by two feature vectors is illustrated in Fig. 11 for simplicity.

The similar damage extraction unit 53G calculates, in the feature space illustrated in Fig. 11, the distance between the feature vector (first feature vector) of the current damage information to be diagnosed, denoted by the symbol •, and a feature vector (second feature vector) of the damage information denoted by each symbol ×, and extracts the damage information denoted by the symbol × as similar damage if the distance is less than or equal to a threshold (inside the circle denoted by the dashed line in Fig. 11). The threshold value can be optimized by statistical methods.

The distance may be the distance when the multiple parameters of the first and second feature vectors are not weighted (Euclidean distance) or the distance with weighted parameters (Mahalanobis distance). What weights are assigned to which parameters may be determined by statistical methods such as principal component analysis.

In addition to a determination like the above, additional search criteria may be designated as points or ranges in the feature space. For example, if a bridge with a completion date on or after January 1, 1990, and a basic structure such as a girder bridge is designated, damage to structures within the designated range can be extracted as similar damage.

In addition to the above, damage information, structure information, environment information, history information, inspection information, and the like included in the other information can be set as axes of the feature space to extract similar damage.

Note that a method different from determining the distance in a feature space may also be used as the method of extracting similar damage. For example, similar damage may also be extracted using artificial intelligence (AI) for determining similarity from images, AI for determining similarity with a combination of multiple types of information from among images, the damage information, and the other information, or the like.

By preparing and referencing comments from similar damage in the past, the know-how of experienced engineers can be used as a reference to train young engineers.

### Displaying step

As illustrated in Fig. 4, the display processing unit 55 displays the comments prepared in the preparing step (step S2) on the display device 30 forming a display (displaying step: step S3).

The user is able to use the comments prepared by the structure inspection assistance apparatus 10, and thus can perform the work of preparing comments more efficiently. The findings and other comments by the structure inspection assistance apparatus 10 can be equalized without being influenced by human factors. Note that the inspection assistance program achieves a selection function corresponding to the selecting step, a preparation function corresponding to the preparing step, and a display function corresponding to the displaying step with the CPU 20 or the like.

Next, a preferred embodiment of the selecting step (step S1), preparing step (step S2), and displaying step (step S3) will be described.

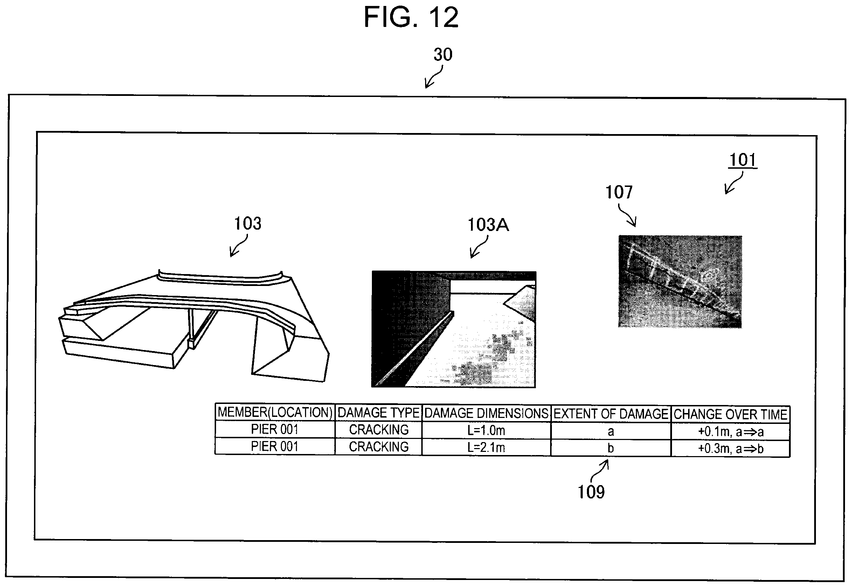

Fig. 12 is a diagram illustrating an example of a screen displayed on a display device in the selecting step (step S1). As illustrated in Fig. 12, the three-dimensional model 103, an enlarged three-dimensional model 103A, and the target structure-related information 101 are displayed on a single screen on the display device 30. The captured image 107 and the damage information 109 are displayed as the target structure-related information 101. It is also possible to simply display one of either the captured image 107 or the damage information 109.

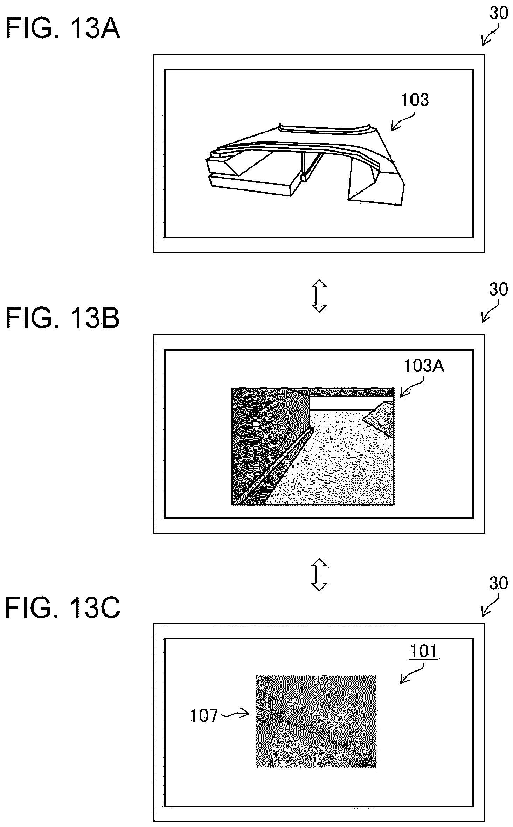

Figs. 13A to 13C are diagrams illustrating other examples of screens displayed on the display device 30. As illustrated in Fig. 13A, only the three-dimensional model 103 is displayed on the display device 30. As illustrated in Fig. 13B, an enlarged three-dimensional model 103 is displayed on the display device 30. As illustrated in Fig. 13C, only the target structure-related information 101 is displayed on the display device 30. In Fig. 13C, the captured image 107 is displayed as the target structure-related information 101.

As illustrated in Figs. 13A to 13C, the screen may be switched from the display of the three-dimensional model 103 illustrating an overall bird's-eye view (Fig. 13A) to the display of the enlarged three-dimensional model 103A (Fig. 13B), and then to the display of the target structure-related information 101 (Fig. 13C). The screen may also be switched from the display of the target structure-related information 101 (Fig. 13C) to the display of the enlarged three-dimensional model 103A (Fig. 13B), and then to the display of the three-dimensional model 103 (Fig. 13A).

As illustrated in Fig. 12 and Figs. 13A to 13C, by executing the selection processing unit 51 of the structure inspection assistance apparatus 10, the target structure-related information 101 is selected (selecting step: step S1).

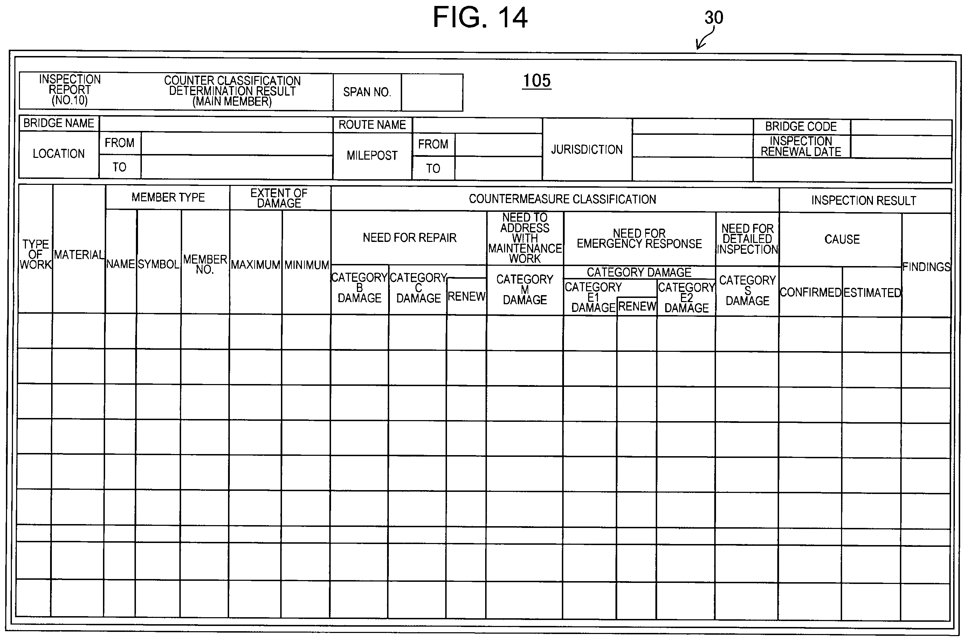

Fig. 14 is a diagram illustrating an example of displaying, on the display device 30, an example of a template for the inspection report data 105. The template for the inspection report data 105 illustrates a state with no text data entered. Text data corresponding to the material (material name), symbol, member symbol, extent of damage, need for repair, need for detailed inspection, cause, and findings and other comments is entered into the inspection report data 105. In the inspection report data 105 in Fig. 14, the text data of findings and other comments is entered in the rightmost field.

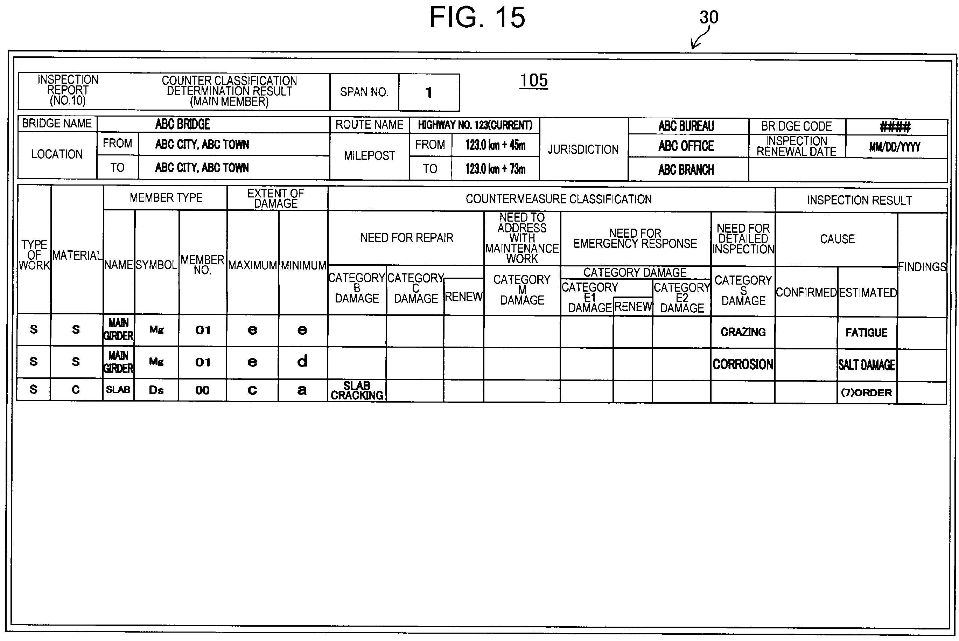

Fig. 15 is a diagram illustrating an example of displaying, on the display device 30, inspection report data 105 in which text data other than findings and other comments has been entered. The user manually enters text data based on the target structure-related information 101 into relevant fields other than the findings and other comments in the inspection report data 105. The structure inspection assistance apparatus 10 may also automatically enter text data based on the target structure-related information 101 into relevant fields other than the findings and other comments in the inspection report data 105.

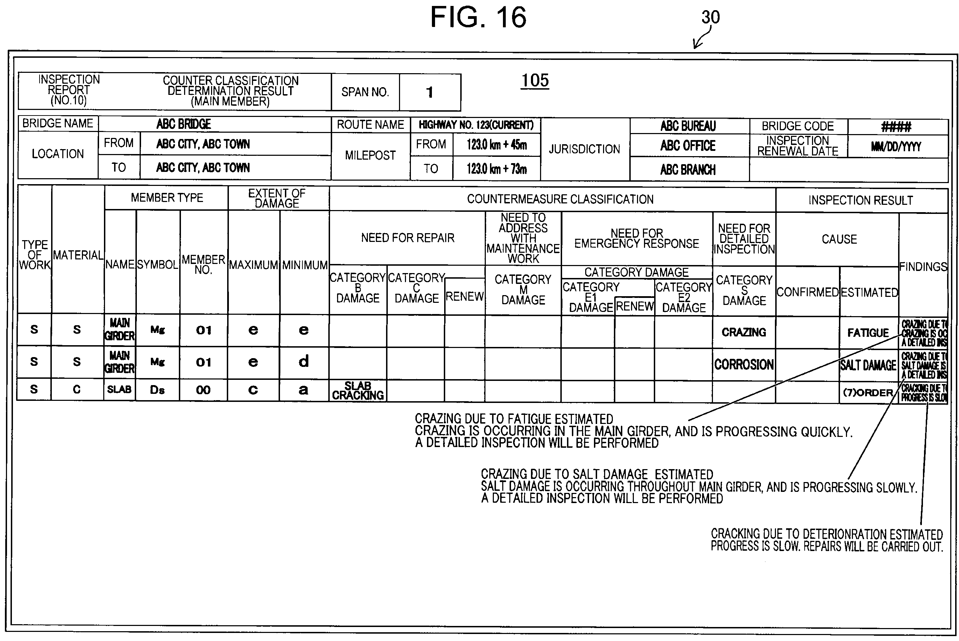

Fig. 16 is a diagram illustrating an example of displaying, on the display device 30, inspection report data 105 in which text data of findings and other comments has been entered. By having the preparation processing unit 53 of the structure inspection assistance apparatus 10 execute the preparing step (step S2) and having the display processing unit 55 execute the displaying step (step S3), the display device 30 displays the findings field containing automatically prepared comments. In Figs. 15 and 16, only three rows are shown, but the findings field is not limited to three rows.

As illustrated in Fig. 16, automatically prepared comments are displayed in the findings field. The user may edit the content of the prepared comments through the operating unit 18 (not illustrated). The CPU 20 executes an editing process of accepting edits to the comments and modifying the comments.

To simplify the editing process, the preparation processing unit 53 may prepare a comment template according to the selected damage, and the display processing unit 55 may display the comment template on the display device 30. The user may re-select appropriate comments from the comment template.

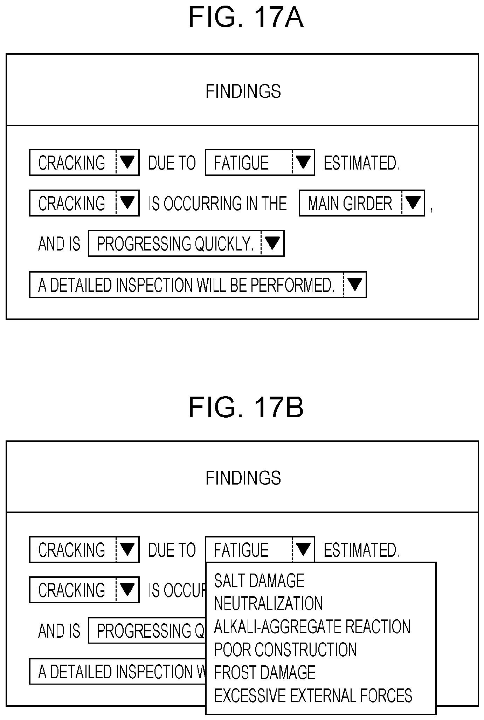

Figs. 17A and 17B are diagrams illustrating an example of the editing process. As illustrated in Fig. 17A, comments prepared by the structure inspection assistance apparatus 10 are displayed in the findings field. The comments have been prepared using a template corresponding to the selected type of damage.

In one example, the comments contain the following information: "(Damage type) due to (cause of damage) estimated. (Damage type) is occurring in (location/range), and (comment related to progressiveness) (comment related to response)." In Fig. 17A, the following is displayed: "(Cracking) due to (fatigue) estimated. (Cracking) is occurring in the (main girder), and is (progressing quickly.) (A detailed inspection will be performed.)" The comments in parentheses are prepared automatically and the results are entered.

On the structure inspection assistance apparatus 10, as illustrated in Fig. 17B, comment candidates are displayed in pull-down menus, and another candidate may be reselected from the comment candidates.

For example, candidates in the pull-down menu for (cause of damage) may include "fatigue", "salt damage", "neutralization", "alkali-aggregate reaction", "frost damage", "poor construction", "excessive external forces", and the like in the case of a concrete member, or "fatigue", "salt damage", "water leakage", "material deterioration", "coating deterioration", "poor construction", "excessive external forces", and the like in the case of a steel member.

Candidates in the pull-down menu for (damage type) may include "cracking", "slab cracking", "water leakage", "free lime", "delamination", "exposed rebar", "crazing", and "corrosion", for example.

Candidates in the pull-down menu for (location/range) may include "main girder", "crossbar", "pier", "abutment", "bearing", and the like, and may also include "throughout", "at the edges", and the like.

Candidates in the pull-down menu for (comment related to progressiveness) may include "progressing quickly.", "progressing slowly.", "not a concern regarding progression. ", and the like.

Candidates in the pull-down menu for (comment related to response) may include "A detailed inspection will be performed.", "A follow-up inspection will be performed.", "Repairs will be carried out.", "Countermeasures will be implemented. ", and the like.

The candidates in the pull-down menus are selected appropriately depending on the damage. The user may also edit the comments of the candidates in the pull-down menus.

Comments on similar damage extracted in the similar damage extraction process may also be displayed on the display device 30 as a findings template. Comments on similar damage may also be edited using pull-down menus in a manner similar to the editing process illustrated in Fig. 17.

The CPU 20 may execute a related information extraction process of extracting related information that is related to damage to the target structure, and the display processing unit 55 of the CPU 20 may display the related information on the display device 30.

Inspection data regarding the selected damage, past inspection data regarding the selected damage, data about other closely related damage (such as damage located close to the selected damage or damage on the other side), and inspection data regarding similar damage (which may be of another structure) may be displayed on the display device 30 as the related information that is related to damage to the target structure. By displaying related information that is related to damage to the target structure, the user may edit the comments.

### Other

In the above embodiment, the hardware structure of a processing unit that executes various processing is any of various types of processors like the following. The various types of processors include: a central processing unit (CPU), which is a general-purpose processor that executes software (a program or programs) to function as any of various types of processing units; a programmable logic device (PLD) whose circuit configuration is modifiable after fabrication, such as a field-programmable gate array (FPGA); and a dedicated electric circuit, which is a processor having a circuit configuration designed for the specific purpose of executing a specific process, such as an application-specific integrated circuit (ASIC).

A single processing unit may be configured as any one of these various types of processors, or may be configured as two or more processors of the same or different types (such as multiple FPGAs, or a combination of a CPU and an FPGA, for example). Moreover, multiple processing units can be configured as a single processor. A first example of configuring a plurality of processing units as a single processor is a mode in which a single processor is configured as a combination of software and one or more CPUs, as typified by a computer such as a client or a server, such that the processor functions as the plurality of processing units. A second example of the above is a mode utilizing a processor in which the functions of an entire system, including the plurality of processing units, are achieved on a single integrated circuit (IC) chip, as typified by a system on a chip (SoC). In this way, various types of processing units are configured as a hardware structure by using one or more of the various types of processors indicated above.

More specifically, the hardware structure of these various types of processors is circuitry combining circuit elements such as semiconductor devices.

Each configuration and function described above is achievable, as appropriate, by any hardware, software, or a combination of hardware and software. For example, the present invention is also applicable to a program causing a computer to execute the processing steps (processing procedure) described above, a computer-readable recording medium (non-transitory recording medium) storing such a program, or a computer in which such a program is installable.

Although an example of the present invention is described above, the present invention is not limited to the foregoing embodiments, and obviously a variety of modifications are possible within a scope that does not depart from the gist of the present invention.

### Reference Signs List

- 10: structure inspection assistance apparatus
- 12: input/output interface
- 16: storage unit
- 18: operating unit
- 20: CPU
- 22: RAM
- 24: ROM
- 26: display control unit
- 30: display device
- 51: selection processing unit
- 53: preparation processing unit
- 53A: trained model
- 53B: trained model
- 53C: trained model
- 53D: damage detection result
- 53E: damage detection result
- 53F: damage detection result
- 55: display processing unit
- 60: database
- 101: target structure-related information
- 103: three-dimensional model
- 103A: three-dimensional model
- 105: inspection report data
- 107: captured image
- 107A: captured image
- 107B: captured image
- 107C: captured image
- 109: damage information
- 131: slab
- 133: pier
- 135: abutment
- 140: structure-related information
- 142: comment
- S1, S2, S3: step

## Claims

1. A structure inspection assistance apparatus comprising
a processor configured to perform:
a selection process of accepting a selection of target structure-related information including at least one of a captured image or damage information pertaining to a target structure;
a preparation process of preparing a comment on damage to the target structure on a basis of the selected target structure-related information; and
a display process of displaying the comment on a display.

2. The structure inspection assistance apparatus according to claim 1, wherein
the preparation process prepares at least one comment on damage to the target structure on a basis of at least one of the captured image or the damage information.

3. The structure inspection assistance apparatus according to claim 1 or 2, wherein
the preparation process uses machine learning to prepare the comment on damage to the target structure.

4. The structure inspection assistance apparatus according to any one of claims 1 to 3, further comprising:
a database storing past target structure-related information, including at least one of a captured image or damage information pertaining to a structure, in association with a comment on damage to the structure, wherein
the preparation process prepares, as a comment on damage to the structure, a comment on damage to the structure regarding similar damage that is similar to damage to the target structure, on a basis of the target structure-related information and structure-related information stored in the database.

5. The structure inspection assistance apparatus according to any one of claims 1 to 4, wherein
the selection process accepts a selection of the target structure-related information through a selection of a three-dimensional model of a structure associated with the target structure-related information.

6. The structure inspection assistance apparatus according to any one of claims 1 to 4, wherein
the selection process accepts an automatic selection, from the target structure, of target structure-related information about which the comment is prepared.

7. The structure inspection assistance apparatus according to claim 6, wherein
the selection process accepts the automatic selection of the target structure-related information on a basis of at least one of the captured image or the damage information.

8. The structure inspection assistance apparatus according to any one of claims 1 to 7, wherein
the processor executes an editing process of accepting an edit to the comment and modifying the comment.

9. The structure inspection assistance apparatus according to claim 8, wherein
the editing process accepts, as the edit to the comment, a comment candidate selected from a plurality of comment candidates corresponding to the comment.

10. The structure inspection assistance apparatus according to any one of claims 1 to 9, wherein
the processor executes a related information extraction process of extracting related information that is related to damage to the target structure, and
the display process displays the related information on the display.

11. A structure inspection assistance method enacted by a processor, the method comprising:
a selecting step of accepting a selection of target structure-related information including at least one of a captured image or damage information pertaining to a target structure;
a preparing step of preparing a comment on damage to the target structure on a basis of the selected target structure-related information; and
a displaying step of displaying the comment on a display.

12. A structure inspection assistance program causing a computer to achieve:
a selection function of accepting a selection of target structure-related information including at least one of a captured image or damage information pertaining to a target structure;
a preparation function of preparing a comment on damage to the target structure on a basis of the selected target structure-related information; and
a display function of displaying the comment on a display.
